# EUROPEAN PATENT APPLICATION

(11) **EP 4 848 804 A1**
(43) Date of publication of application: **02.12.2026**
(21) Application number: 24923467.5
(22) Date of filing: 21.11.2024
(51) Int. Cl.: H04W 28/16, H04L 41/16, G06N 20/00

(54) **COMMUNICATION METHOD AND COMMUNICATION APPARATUS**

(30) Priority: 07.02.2024 CN 202410174574
(71) Applicant: Huawei Technologies Co., Ltd., Shenzhen, Guangdong 518129 (CN)
(72) Inventor: TANG, Yuanxian, Shenzhen, Guangdong 518129 (CN); HE, Yu, Shenzhen, Guangdong 518129 (CN); DONG, Weiwei, Shenzhen, Guangdong 518129 (CN); LIU, Runjiang, Shenzhen, Guangdong 518129 (CN)
(74) Representative: Huawei European IPR
(86) International application number: PCT/CN2024/133458
(87) International publication number: WO 2025/167265

(57) **Abstract**

A communication method and a communication apparatus are provided, relating to the field of communication technologies. In the method, a central node may obtain, from a first radio unit, request information for training a first AI model; the central node may determine whether the central node can help train the first AI model; and when the central node determines that the central node can help train the first AI model, the accuracy of a first AI model trained by the central node is superior to that of a first AI model trained by the first radio unit. In this way, improving accuracy of an AI model used by a radio unit can be supported.

## Description

This application claims priority to Chinese Patent Application No. 202410174574.4, filed with the China National Intellectual Property Administration on February 7, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In the field of wireless communication, the industry is exploring how to use artificial intelligence (artificial intelligence, AI) to reconstruct core functions of radio access networks (radio access networks, RANs), for example, empowering the RANs with AI capabilities (including a training capability, an inference capability, and the like).

The AI capabilities of the RANs may evolve from RAN intelligent controllers (RAN intelligent controllers, RICs) to AI-native (Native) RANs. In other words, the AI capabilities of the RANs may evolve from being deployed only on the RICs to being deployed on distributed nodes such as central units (central units, CUs), distributed units (distributed units, DUs), and radio units (radio units, RUs). However, when AI models are specifically used in the RUs, accuracy of the AI models may not meet requirements of the RUs.

### SUMMARY

This application provides a communication method and a communication apparatus, to support improving accuracy of an AI model used by a radio unit.

According to a first aspect, a communication method is provided, including: sending first request information, where the first request information is used to request training of a first AI model; and receiving response information, where the response information indicates whether training of the first AI model is allowed.

An execution body of the solution according to the first aspect may be a first radio unit, or may be a module (for example, a chip system) in the first radio unit, or may be a logical node, a logical module, or software that can implement all or a part of functions of the first radio unit. This is not limited herein. For ease of description, the following uses the first radio unit as an example for description.

In the foregoing solution, the first radio unit sends the first request information to a central node, and receives the response information from the central node. An interaction mechanism for exchanging request information between the first radio unit and the central node is established, so that improving accuracy of an AI model used by a radio unit can be supported in this embodiment of this application.

In comparison with a solution in which the first radio unit independently trains the first AI model, through exchange of request information between the first radio unit and the central node, the first radio unit may request the central node to help train the first AI model. Because a training capability of the central node is better than a training capability of the first radio unit, completing training of the first AI model with the help of the central node can avoid insufficient model accuracy of a first AI model trained caused by an insufficient amount of training data of the first radio unit, imbalanced data distribution, or an undiversified data source.

Based on the foregoing interaction mechanism, the central node may obtain, from the first radio unit, the request information for training the first AI model; the central node may determine whether the central node can help train the first AI model; and when the central node determines that the central node can help train the first AI model, the accuracy of a first AI model trained by the central node is superior to that of a first AI model trained by the first radio unit.

Based on the foregoing interaction mechanism, the first radio unit may have an opportunity to request the central node to help train the first AI model. In comparison with a solution in which the first radio unit independently completes training of the first AI model, completing training of the first AI model with the help of the central node can overcome insufficient model accuracy of a first AI model trained caused by an insufficient amount of training data of the first radio unit, imbalanced data distribution, or an undiversified data source, thereby supporting improving accuracy of an AI model used by a radio unit.

According to the first aspect, the method further includes: sending first training data, where the first training data is used to train at least one of a common parameter and a feature parameter of the first AI model, where the common parameter of the first AI model is a parameter shared by the first AI model and a second AI model, and the feature parameter of the first AI model is a parameter that distinguishes the first AI model from the second AI model; and receiving a third AI model, where the third AI model is a model obtained by training the first AI model.

When the response information indicates that the central node agrees to train the first AI model, the first radio unit may report the first training data to the central node, and the central node may train the first AI model by using the first training data, and send, to the first radio unit, the third AI model trained. In this way, the first radio unit may obtain the third AI model trained by the central node.

According to the first aspect, the receiving the third artificial intelligence model includes: sending second request information, where the second request information is used to request to obtain the third AI model; and receiving the third AI model.

Based on the foregoing information exchange, the first radio unit may obtain, from the central node, the third AI model trained.

According to the first aspect, before the sending the second request information, the method further includes: receiving notification information, where the notification information indicates that training of the first AI model is completed.

In this way, after completing training of the first AI model, the central node may indicate, to the first radio unit, that training of the first AI model is completed, and the first radio unit may determine, based on the indication, that the first radio unit may request to obtain the third AI model.

According to the first aspect, the method further includes: sending third request information, where the third request information is used to request updating of the third AI model; and receiving an updated third AI model.

Based on the foregoing information exchange, the first radio unit may complete an update procedure of the third AI model, and obtain, from the central node, the updated third AI model.

According to the first aspect, the third model is a model obtained by training the first model based on the first training data and second training data, where the second training data is from a second radio unit, and the second radio unit is different from the first radio unit.

Training the first AI model using training data from another radio unit can increase a source, an amount, a type, and distribution of data used for training the first AI model, thereby supporting improving accuracy of the third AI model.

According to a second aspect, a communication method is provided, including: receiving first request information, where the first request information is used to request training of a first AI model; and sending response information, where the response information indicates whether training of the first AI model is allowed.

An execution body of the solution according to the second aspect may be a central node, or may be a module (for example, a chip system) in the central node, or may be a logical node, a logical module, or software that can implement all or a part of functions of the central node. This is not limited herein. For ease of description, the following uses the central node as an example for description.

In the foregoing solution, a first radio unit sends the first request information to the central node, and receives the response information from the central node.

Based on the foregoing interaction mechanism, the first radio unit may have an opportunity to request the central node to help train the first AI model. In comparison with a solution in which the first radio unit independently completes training of the first AI model, completing training of the first AI model with the help of the central node can overcome insufficient model accuracy of a first AI model trained caused by an insufficient amount of training data of the first radio unit, imbalanced data distribution, or an undiversified data source, thereby supporting improving accuracy of an AI model specifically used by a radio unit.

According to the second aspect, the method further includes: receiving first training data, where the first training data is used to train at least one of a common parameter and a feature parameter of the first AI model, where the common parameter of the first AI model is a parameter shared by the first AI model and a second AI model, and the feature parameter of the first AI model is a parameter that distinguishes the first AI model from the second AI model; training the first AI model based on the first training data to obtain a third AI model; and sending the third AI model.

When the response information indicates that the central node agrees to train the first AI model, the first radio unit may report the first training data to the central node, and the central node may train the first AI model by using the first training data, and send, to the first radio unit, the third AI model trained. In this way, the first radio unit may obtain the AI model trained by the central node.

According to the second aspect, the sending the third AI model includes: receiving second request information, where the second request information is used to request to obtain the third AI model; and sending the third AI model.

According to the second aspect, before the receiving the second request information, the method further includes: sending notification information, where the notification information indicates that training of the first AI model is completed.

According to the second aspect, the method further includes: receiving third request information, where the third request information is used to request updating of the third AI model; and sending an updated third AI model.

According to the second aspect, the training the first AI model based on the first training data to obtain the third model includes: training the first AI model based on the first training data and second training data to obtain the third model, where the second training data is from a second radio unit, and the second radio unit is different from the first radio unit.

Training the first AI model using training data from another radio unit can increase a source and a type of data used for training the first AI model, thereby supporting improving accuracy of the third AI model trained.

According to the second aspect, the training the first AI model based on the first training data to obtain the third artificial intelligence model includes: determining the common parameter of the first AI model and the feature parameter of the first AI model; and separately training the common parameter of the first AI model and the feature parameter of the first AI model based on the first training data.

Parameters of the first AI model are classified into the common parameter and the feature parameter, and are separately trained. In this way, a common parameter trained is applicable to another AI model, and training overheads can be reduced. For example, the common parameter needs to be trained only once. In addition, a differentiation requirement of the first AI model can also be met.

With reference to the method according to any one of the first aspect and the second aspect, the first request information includes at least one of the following: a name of the first AI model, a to-be-trained parameter of the first AI model, an identifier of the first radio unit, or an identifier of a cell corresponding to the first radio unit, where the first radio unit is a radio unit for which the first AI model is used.

With reference to the method according to any one of the first aspect and the second aspect, the to-be-trained parameter is at least one of the feature parameter and the common parameter of the first AI model.

With reference to the method according to any one of the first aspect and the second aspect, the response information includes at least one of the following: the name of the first AI model, the identifier of the first radio unit, acknowledgment information, or negative acknowledgment information. The acknowledgment information indicates that training of the first AI model is allowed, and the negative acknowledgment information indicates that training of the first AI model is not allowed. The first radio unit is a radio unit for which the first AI model is used.

With reference to the method according to any one of the first aspect and the second aspect, the first request information includes performance requirement information for the first AI model.

The performance requirement information for the first AI model is reported, so that the central node can train the first AI model in a targeted manner based on the performance requirement information for the first AI model. This can avoid invalid training caused because a first AI model trained cannot meet a performance requirement of the first radio unit, and further avoid an increase in overheads of training the first AI model by the central node.

According to a third aspect, a communication apparatus is provided. The communication apparatus includes: an interface unit, configured to send first request information, where the first request information is used to request training of a first AI model; and the interface unit is further configured to receive response information, where the response information indicates whether training of the first AI model is allowed.

The communication apparatus may be further configured to perform the solution described in the method according to any one of the first aspect and the possible implementations of the first aspect. Details are not described again.

According to a fourth aspect, a communication apparatus is provided. The communication apparatus includes: an interface unit, configured to receive first request information, where the first request information is used to request training of a first AI model; and the interface unit is further configured to send response information, where the response information indicates whether training of the first AI model is allowed.

The communication apparatus may be further configured to perform the solution described in the method according to any one of the second aspect and the possible implementations of the second aspect. Details are not described again.

According to a fifth aspect, a communication apparatus is provided, including a processor. The processor is configured to cause, by executing a computer program or instructions or by using a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory, configured to store the computer program or the instructions.

In a possible implementation, the communication apparatus further includes a communication interface, configured to input and/or output a signal.

According to a sixth aspect, a communication apparatus is provided, including a logic circuit and an input/output interface. The input/output interface is configured to input and/or output a signal; and the logic circuit is configured to perform the method according to any one of the first aspect and the possible implementations of the first aspect, or the logic circuit is configured to perform the method according to any one of the second aspect and the possible implementations of the second aspect.

According to a seventh aspect, a computer-readable storage medium is provided. The computer-readable storage medium stores a computer program or instructions; and when the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided, including instructions. When the instructions are run on a computer, the method according to any one of the first aspect and the possible implementations of the first aspect is performed, or the method according to any one of the second aspect and the possible implementations of the second aspect is performed.

According to a ninth aspect, a chip system is provided. The chip system is connected to a memory, and the chip system is configured to read a software stored in the memory and execute the software program, to perform the method according to any one of the first aspect and the possible implementations of the first aspect, or perform the method according to any one of the second aspect and the possible implementations of the second aspect.

According to a tenth aspect, a chip system is provided. The chip system includes: a communication interface, configured to communicate with another apparatus; and a processor, configured to cause a communication device on which the chip system is installed to perform the method according to any one of the first aspect and the possible implementations of the first aspect, or cause a communication device on which the chip system is installed to perform the method according to any one of the second aspect and the possible implementations of the second aspect.

According to an eleventh aspect, a chip system is provided. The chip system includes a processor, a memory, and an input/output port. The memory is configured to store a computer program; and the processor is configured to execute the computer program stored in the memory, to cause the processor the perform the method according to any one of the first aspect and the possible implementations of the first aspect, or cause the processor to perform the method according to any one of the second aspect and the possible implementations of the second aspect.

According to a twelfth aspect, a chip system is provided. The chip system is applied to an electronic device, the chip system includes one or more processors, and the processor is configured to invoke computer instructions, to cause the electronic device to perform the method according to any one of the first aspect and the possible implementations of the first aspect, or cause the electronic device to perform the method according to any one of the second aspect and the possible implementations of the second aspect.

According to a thirteenth aspect, a communication system is provided, including a first radio unit and a central node. The first radio unit is configured to send first request information to the central node, where the first request information is used to request training of a first artificial intelligence model; and the central node is configured to receive the first request information, and send response information to the first radio unit, where the response information indicates whether training of the first artificial intelligence model is allowed.

The first radio unit and the central node may be further configured to perform the foregoing method, and details are not described again.

For descriptions of beneficial effects of any one of the third aspect to the thirteenth aspect, refer to the descriptions of the beneficial effects of the first aspect and the second aspect.

### BRIEF DESCRIPTION OF DRAWINGS

FIG. 1 is a diagram of an application framework according to an embodiment of this application;
FIG. 2 is a diagram of another application framework according to an embodiment of this application;
FIG. 3 is a diagram of a communication system to which an embodiment of this application is applicable;
FIG. 4 is a diagram of another communication system to which an embodiment of this application is applicable;
FIG. 5 is a schematic interaction flowchart of a communication method according to an embodiment of this application;
FIG. 6 is a schematic interaction flowchart of another communication method according to an embodiment of this application;
FIG. 7 is a schematic interaction flowchart of still another communication method according to an embodiment of this application;
FIG. 8 is a block diagram of a communication apparatus according to an embodiment of this application; and
FIG. 9 is a block diagram of another communication apparatus according to an embodiment of this application.

### DESCRIPTION OF EMBODIMENTS

The following describes technical solutions of this application with reference to accompanying drawings.

For ease of understanding of embodiments of this application, the following several descriptions are provided first.
1. In this application, unless otherwise stated, "a plurality of or at least two" means two or more.
2. In various embodiments of this application, unless otherwise stated or there is a logic conflict, terms and/or descriptions in different embodiments are consistent and may be mutually referenced, and technical features in different embodiments may be combined based on an internal logical relationship thereof to form a new embodiment.
3. Various numbers in this application are merely used for differentiation for ease of description, but are not intended to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.
   In addition, any embodiment or design scheme described as an "example" or "for example" in this application should not be explained as being more preferred or having more advantages than another embodiment or design scheme. Exactly, the words such as "example" or "for example" are used to present a related concept in a specific manner for ease of understanding.
4. The terms "include", "have", and any variants thereof are intended to cover non-exclusive inclusion. For example, a process, a method, a system, a product, or a device that includes a series of steps or units is not necessarily limited to the steps or units that are clearly listed, but may include other steps or units that are not clearly listed or inherent to the process, the method, the product, or the device.
5. In this application, "indicate" may be understood as "enable", and "enable" may include directly enabling and indirectly enabling. When a piece of information is described as enabling A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, to reduce enabling overheads to some extent. In addition, a common part of all information may be identified and enabled in a unified manner, to reduce enabling overheads caused by enabling the same information separately.
6. In this application, "pre-configure" may include "pre-define", for example, define in a protocol. "Pre-define" may be implemented by pre-storing corresponding code or a corresponding table in a device (for example, including network elements), or may be implemented in another manner that may indicate related information. A specific implementation thereof is not limited in this application.
7. "Storage" or "store" in this application may mean storage in one or more memories. The one or more memories may be separately disposed, or may be integrated into an encoder, a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited.
8. A "protocol" in this application may be a standard protocol in the communication field, for example, may include a fourth generation (4th generation, 4G) network protocol, a fifth generation (5th generation, 5G) network protocol, a new radio (new radio, NR) protocol, a 5.5G network protocol, a sixth generation (6th generation, 6G) network protocol, and a related protocol applied to a future communication system. This is not limited in this application.
9. Arrows or blocks shown by dashed lines in diagrams of the accompanying drawings in this specification of this application indicate optional steps or optional modules.
10. In this application, unless otherwise stated, "/" indicates an "or" relationship between associated objects. For example, A/B may indicate A or B. "And/or" in this application describes only an association relationship for describing the associated objects and indicates that three relationships may exist. For example, A and/or B may indicate the following three cases: Only A exists, both A and B exist, and only B exists, where A and B may be singular or plural.
11. In this application, an indication includes a direct indication (also referred to as an explicit indication) and an implicit indication. Directly indicating information A means including the information A. Implicitly indicating information A means indicating the information A by using a correspondence between the information A and information B and by directly indicating the information B. The correspondence between the information A and the information B may be predefined, pre-stored, pre-burned, or pre-configured.
12. In this application, that information C is used to determine information D includes that the information D is determined based only on the information C, and also includes that the information D is determined based on the information C and other information. In addition, that information C is used to determine information D may further include an indirect determining case, for example, a case in which the information D is determined based on information E, and the information E is determined based on the information C.
13. In this application, that "an apparatus A sends information A to an apparatus B" may be understood as that a destination end of the information A or an intermediate network element in a transmission path between the apparatus A and the destination end is the apparatus B, and may include directly or indirectly sending information to the apparatus B.
14. In this application, that "an apparatus B receives information A from an apparatus A" may be understood as that a source end of the information A or an intermediate network element in a transmission path between the apparatus B and the source end is the apparatus A, and may include directly or indirectly receiving information from the apparatus A. Information may undergo necessary processing, for example, a format change, between a source end for sending the information and a destination end. However, the destination end may understand valid information from the source end. Similar descriptions in this application may be understood similarly. Details are not described herein.

First, a communication system to which an embodiment of this application is applicable is described.

The technical solutions provided in this application may be applied to various communication systems, for example, a fifth generation (5th generation, 5G) communication system, a new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, and another communication system like a sixth generation (6th generation, 6G) communication system.

The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in the communication system may send a signal to another device or receive a signal from another device. The signal may include information, signaling, data, or the like. The device may alternatively be replaced with an entity, a network entity, a network element, a communication device, a communication module, a node, user equipment, a mobile device, a communication node, or the like. In this embodiment of this application, the device is used as an example for description. For example, the communication system may include at least one terminal device and at least one network device. The network device may send a downlink signal to the terminal device, and/or the terminal device may send an uplink signal to the network device.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

In embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be a terminal device, or may be an apparatus that can support the terminal device in implementing the function, for example, a chip system, where the apparatus may be installed in the terminal device or used in matching with the terminal device. In this embodiment of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

In embodiments of this application, the network device may be a device configured to communicate with the terminal device, and the network device may also be referred to as an access network device or a radio access network device, for example, a base station. The network device in embodiments of this application may be a RAN node (or device) that connects the terminal device to a wireless network. The base station may cover various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a CU, a DU, an RU, a positioning node, or an RIC. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a function of the base station in D2D, V2X, and M2M communication, a network side device in a 6G network, a device that bears a function of the base station in a future communication system, or the like. The base station may support networks of a same access technology or different access technologies. Optionally, the RAN node may alternatively be a server, a wearable device, a vehicle, a vehicle-mounted device, or the like. For example, the access network device in a V2X technology may be a road side unit (road side unit, RSU). A specific technology and a specific device form used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In different communication systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an open CU (open CU, O-CU), the DU may also be referred to as an open DU (open DU, O-DU), the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented via a software module, a hardware module, or a combination of a software module and a hardware module.

In some deployments, a plurality of RAN nodes cooperate to assist a terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio unit, for example, included in an RRU, an AAU, or an RRH.

The RAN node may support one or more categories of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another category of interface, compared with the CPRI, the interface performs transfer of a part of downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT)/cyclic prefix (cyclic prefix, CP) removal is moved from the DU to the RU for implementation.

In a possible implementation, the interface may be an enhanced common public radio interface (enhanced common public radio interface, eCPRI). In an eCPRI architecture, different split modes between the DU and RU correspond to different categories (categories, Cat) of eCPRIs, for example, eCPRI Cat A, B, C, D, E, and F.

The eCPRI Cat A is used as an example. For downlink transmission, splitting is performed at layer mapping, the DU is configured to implement the layer mapping and one or more preceding functions (to be specific, one or more of encoding, rate matching, scrambling, modulation, or the layer mapping), and another function (for example, one or more of RE mapping, BF, or IFFT/CP addition) after the layer mapping is moved to the RU for implementation. For uplink transmission, splitting is performed at RE demapping. The DU is configured to implement the demapping and one or more preceding functions (to be specific, one or more of decoding, rate de-matching, descrambling, demodulation, inverse discrete Fourier transform (inverse discrete Fourier transform, IDFT), channel equalization, or the RE demapping), and another function (for example, one or more of digital BF, fast Fourier transform (fast Fourier transform, FFT), or CP removal) after the demapping is moved to the RU for implementation. It may be understood that, for function descriptions of DUs and RUs corresponding to various categories of eCPRIs, refer to the eCPRI protocol. Details are not described herein.

In a possible design, a processing unit for implementing a baseband function in the BBU is referred to as a base band high (base band high, BBH) unit, and a processing unit for implementing a baseband function in the RRU/AAU/RRH is referred to as a base band low (base band low, BBL) unit.

In embodiments of this application, an apparatus configured to implement a function of the network device may be a network device, or may be an apparatus that can support the network device in implementing the function, for example, a chip system, a hardware circuit, a software module, or a combination of a hardware circuit and a software module. The apparatus may be installed in the network device or used in matching with the network device. In embodiments of this application, an example in which the apparatus configured to implement the function of the network device is a network device is merely used for description, and constitutes no limitation on the solutions in embodiments of this application.

The network device and/or the terminal device may be deployed on land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device and the network device may be hardware devices; or may be software functions running on dedicated hardware or software functions running on general-purpose hardware, for example, virtualization functions instantiated on a platform (for example, a cloud platform); or may be entities including a dedicated or general-purpose hardware device and a software function. Specific forms of the terminal device and the network device are not limited in this application.

In a wireless communication network, services supported by the network are increasingly diversified, and therefore requirements that need to be met are increasingly diversified. For example, the network needs to be capable of supporting an ultra-high rate, an ultra-low latency, and/or massive connections. This feature makes network planning, network configuration, and/or resource scheduling increasingly complex. In addition, because a network function is increasingly powerful, for example, supporting an increasingly high spectrum and supporting new technologies such as a high-order multiple-input multiple-output (multiple-input multiple-output, MIMO) technology, beamforming, and/or beam management, network energy saving becomes a hot research topic. These new requirements, scenarios, and features cause unprecedented challenges to network planning, operation and maintenance, and efficient operation. To face the challenges, an artificial intelligence technology may be introduced into the wireless communication network, to implement network intelligence.

To support an AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over-the-top (over-the-top, OTT) system. The AI node may communicate with another device in the communication system. For example, the another device may be one or more of the following: a network device, a terminal device, a network element of a core network, and the like.

It may be understood that, a quantity of AI nodes is not limited in embodiments of this application. For example, when there are a plurality of AI nodes, the plurality of AI nodes may be classified based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualization functions instantiated on a platform (for example, a cloud platform). A specific form of the AI node is not limited in this application. The AI node may be an AI network element or an AI module.

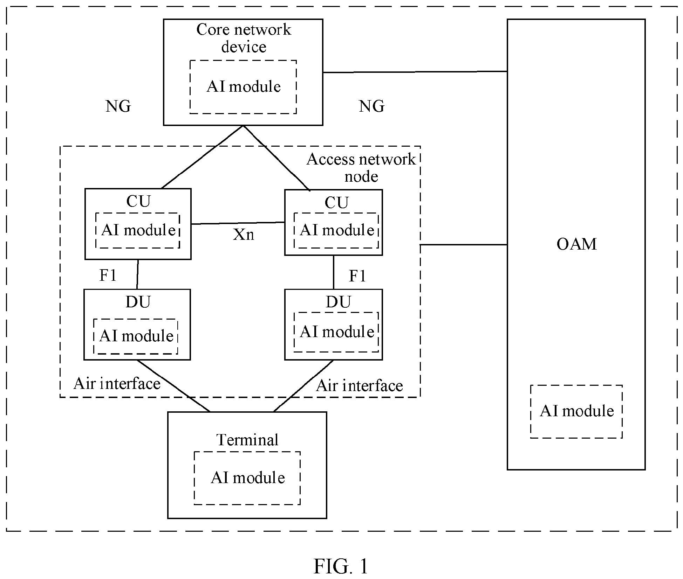

FIG. 1 is a diagram of an application framework according to an embodiment of this application. As shown in FIG. 1, network elements are connected through an interface (for example, NG and Xn) or an air interface. One or more AI modules (for clarity, FIG. 1 shows only one AI module) are disposed in one or more of these network element nodes, such as a core network device, an access network node, a terminal, or operation, administration, and maintenance (operation, administration, and maintenance, OAM). The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed in different nodes or devices, or may be deployed in a same node or device.

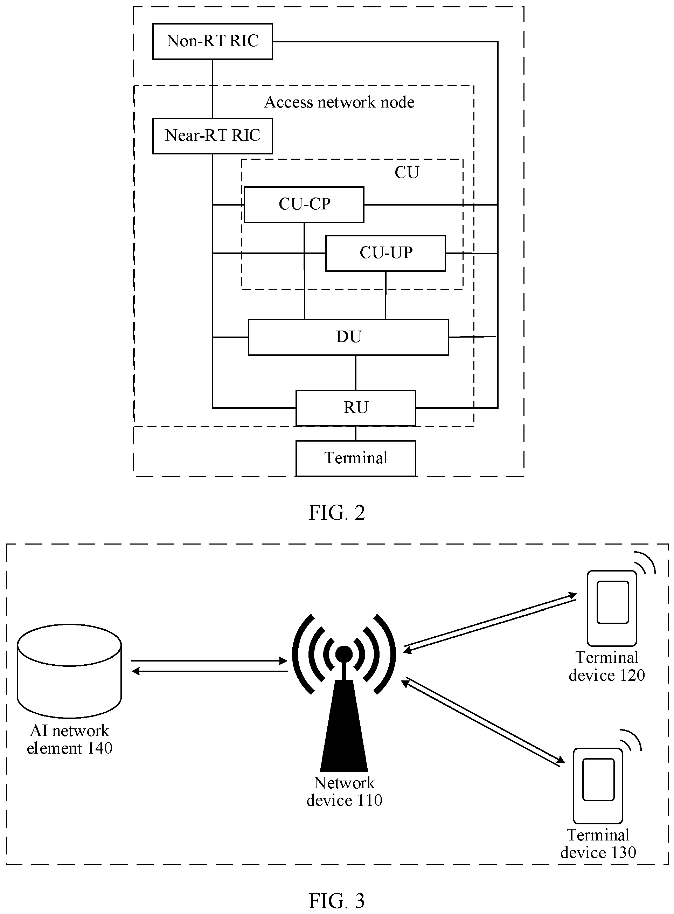

FIG. 2 is a diagram of another application framework according to an embodiment of this application. As shown in FIG. 2, the communication system includes an RIC. For example, the RIC may be AI modules 117 and 118 shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. Latency of the data may be at a granularity of a second. The near-real-time RIC mainly processes near-real-time information, for example, latency-sensitive data. Latency of the data is at a granularity of tens of milliseconds.

The near-RT RIC is used for model training and inference, for example, is used to train an AI model and perform inference by using the AI model. The near-RT RIC may obtain information on a network side and/or a terminal side from a RAN node (for example, a CU, a CU-CP, a CU-UP, a DU, and/or an RU) and/or a terminal. The information may be used as training data or inference data. Optionally, the near-RT RIC may deliver an inference result to the RAN node and/or the terminal. Optionally, the inference result may be exchanged between the CU and the DU and/or between the DU and the RU. For example, the near-RT RIC submits the inference result to the DU, and the DU sends the inference result to the RU.

The non-RT RIC is also used for model training and inference, for example, is used to train an AI model and perform inference by using the model. The non-RT RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be exchanged between the CU and the DU and/or between the DU and the RU. For example, the non-RT RIC submits the inference result to the DU, and the DU sends the inference result to the RU.

The near-RT RIC and the non-RT RIC may also be disposed separately as one network element. Optionally, the near-RT RIC and the non-RT RIC may also be used as a part of another device. For example, the near-RT RIC is disposed in a RAN node (for example, a CU or a DU), and the non-RT RIC is disposed in OAM, a cloud server, a core network device, or another network device.

FIG. 3 is a diagram of a communication system to which an embodiment of this application is applicable. As shown in FIG. 3, the communication system includes a network device 110, a terminal device (for example, a terminal device 120 and a terminal device 130), and an AI network element 140. The AI network element 140 is configured to perform an AI-related operation, for example, constructing a training dataset or training an AI model.

The network device 110 may send data related to training of the AI model to the AI network element 140, and the AI network element 140 constructs a training dataset and trains the AI model. For example, the data related to training of the AI model may include data reported by the terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result of the model, or the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

In FIG. 3, only an example in which the AI network element 140 is directly connected to the network device 110 is used for description. The AI network element 140 may also be connected to the terminal device. Alternatively, the AI network element 140 may be connected to both the network device 110 and the terminal device. Alternatively, the AI network element 140 may be connected to the network device 110 via a third-party network element. A connection relationship between the AI network element and another network element is not limited in embodiments of this application.

The AI network element 140 may alternatively be disposed in a network device and/or a terminal device as a module, for example, disposed on the network device 110 or the terminal device shown in FIG. 3.

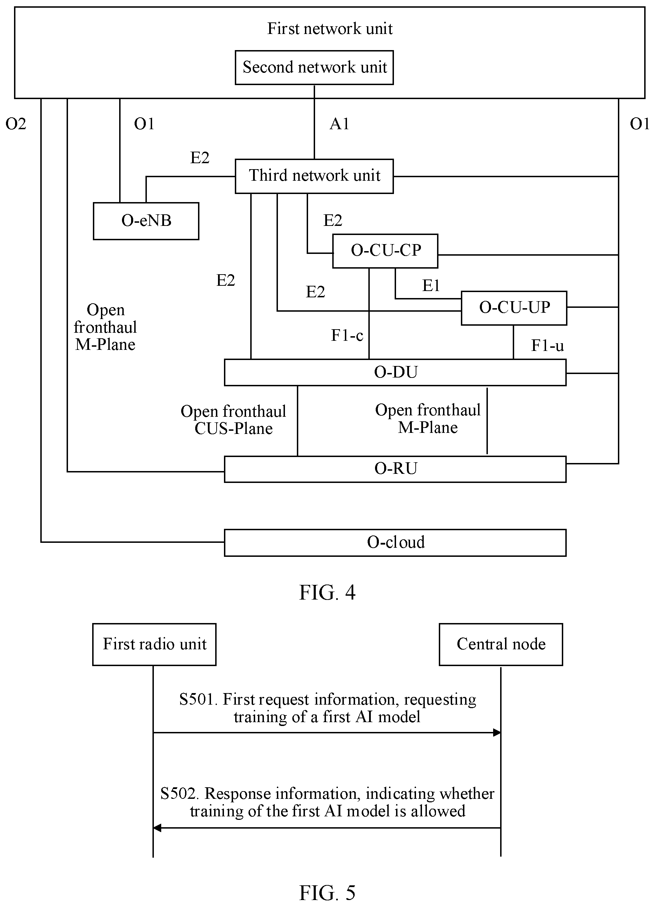

FIG. 4 is a diagram of another communication system to which an embodiment of this application is applicable. As shown in FIG. 4, the communication system includes a first network element, a second network element, a third network element, an O-eNB, an O-CU-CP, an O-CU-UP, an O-DU, an O-RU, and an O-cloud (cloud).

The foregoing network elements (which may also be referred to as nodes) may be connected to each other. For example, the first network element is connected to the O-cloud through an O2 interface, the first network element is connected to the third network element, the O-eNB, the O-CU-CP, the O-CU-UP, the O-DU, and the O-RU through an O1 interface, the first network element is connected to the O-RU through an open fronthaul (open fronthaul) M-Plane interface, the O-DU is connected to the O-RU through an open fronthaul M-Plane interface and an open fronthaul CUS-Plane interface, the third network element is connected to the O-eNB, the O-CU-CP, the O-CU-UP, and the O-DU through an E2 interface, the O-CU-CP is connected to the O-DU through an F1-c interface, the O-CU-UP is connected to the O-DU through an F1-u interface, and the O-CU-CP is connected to the O-CU-UP through an E1 interface. For specific descriptions of the interfaces shown in FIG. 4, refer to an existing standard. Details are not described again.

In a possible example, the first network element may be a service management and orchestration framework (service management and orchestration framework, SMO), or may be a network element with a function similar to that of a SMO. This is not limited herein.

In a possible example, the second network element may be a non-RT RIC, or may be a network element with a function similar to that of a non-RT RIC. This is not limited herein.

In a possible example, the third network element may be a near-RT RIC, or may be a network element with a function similar to that of a near-RT RIC. This is not limited herein.

Then, a part of technical concepts in this application are briefly described.

Machine learning (machine learning, ML): The ML is an important technical approach for implementing AI.

A deep neural network (deep neural network, DNN) is a specific implementation form of the ML. According to a universal approximation theorem, the neural network can approximate any continuous function in theory, so that the neural network has a capability of learning any mapping. In a conventional communication system, a communication module needs to be designed with rich expert knowledge. However, a DNN-based deep learning communication system can automatically discover an implicit pattern structure from a large quantity of datasets, establish a mapping relationship between data, and obtain performance better than that of a conventional modeling method.

Based on a network construction manner, DNNs may be classified into a feedforward neural network (feedforward neural network, FNN), a convolutional neural network (convolutional neural network, CNN), and a recurrent neural network (recurrent neural network, RNN).

The CNN is a neural network dedicated to processing data of a grid-like structure. For example, both time series data (time axis discrete sampling) and image data (two-dimensional discrete sampling) may be considered as data of a grid-like structure. The CNN performs a convolution operation by capturing partial information through a window with a fixed size, instead of performing an operation based on all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. As described above, each neuron performs a weighted summation operation on input values of the neuron, and outputs a weighted summation result through a non-linear function. In this case, a weight value of the weighted summation operation of the neuron in the neural network and the non-linear function are referred to as parameters of the neural network. An example in which max{0, x} is a neuron of a non-linear function is used, parameters of the neuron that performs a $max \left\{0, {\sum }_{i = 0}^{n} {w}_{i} {x}_{i} + b\right\}$ operation is a weight value **w** = [w₀, ... , wₙ] a bias b for weighed summation, and a non-linear function max{0, x}. Parameters of all neurons in a neural network form parameters of the neural network.

AI model: The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another ML model.

The AI model or the AI function may be implemented via a hardware circuit, software, or a combination of software and hardware. This is not limited. A non-limiting example of the software includes program code, a program, a subprogram, instructions, an instruction set, code, a code segment, a software module, an application program, a software application program, or the like.

In the communication architecture shown in FIG. 4, when an RU has an AI capability, the RU may apply an AI model, but accuracy of the AI model may not necessarily meet a requirement of the RU.

In view of this, this application provides a communication method and a communication apparatus, to support improving accuracy of an AI model used by a radio unit.

The following describes an interaction procedure of a communication method in embodiments of this application with reference to the accompanying drawings.

FIG. 5 is a schematic interaction flowchart of a communication method according to an embodiment of this application. The method shown in FIG. 5 may be performed by a first radio unit and a central node (for example, the central node may be one or more network elements among an O-DU, an O-CU, a third network element, a second network element, a first network element, and the like), or may be performed by modules and/or components (for example, chips or integrated circuits) that are installed in the first radio unit and the central node and have corresponding functions. The following uses the first radio unit and the central node as an example for description. As shown in FIG. 5, the method includes the following steps.

S501. The first radio unit sends request information 1 (for example, first request information) to the central node.

Correspondingly, the central node receives the request information 1.

The request information 1 is used to request training of an AI model 1 (for example, a first AI model), or the request information 1 is used by the first radio unit to request the central node to train the AI model 1.

The AI model 1 may be understood as an AI model that needs to be trained. In other words, the AI model 1 is an original AI model to be trained. In other words, a parameter of the AI model 1 is a parameter to be trained. In conclusion, the first radio unit may request the central node to train the AI model 1.

In a possible implementation, the request information 1 may include at least one of the following:
◆ a name of the AI model 1;
◆ a to-be-trained parameter of the AI model 1;
◆ an identifier of the first radio unit; or
◆ an identifier of a cell corresponding to the first radio unit.

For example, the request information 1 includes the name of the AI model 1. The central node may determine, based on the name of the AI model 1, an AI model whose training is requested by the first radio unit.

For example, the request information 1 includes the to-be-trained parameter of the AI model 1. The central node may determine, based on the to-be-trained parameter of the AI model 1, a parameter that needs to be trained in the AI model 1, that is, the central node may determine a target parameter that needs to be trained. In this way, the central node does not need to train all parameters of the AI model 1, and the central node may perform AI model training in a targeted manner. This can effectively reduce power consumption of the central node.

For example, the request information 1 includes the identifier of the first radio unit. The central node may determine, based on the identifier of the first radio unit, that the AI model 1 is an AI model that needs to be used by the first radio unit, that is, the central node may determine that the request information 1 is from the first radio unit.

For example, the request information 1 includes the identifier of the cell corresponding to the first radio unit. The central node may determine, based on the identifier of the cell corresponding to the first radio unit, a cell to which the AI model 1 is specifically applied.

When the request information 1 includes one or more of the identifier of the first radio unit, the identifier of the cell corresponding to the first radio unit, and the to-be-trained parameter of the AI model 1, the central node may determine the corresponding AI model based on an association relationship between the AI model 1 and one or more of the identifier of the first radio unit, the identifier of the cell corresponding to the first radio unit, and the to-be-trained parameter of the AI model 1. For details, refer to Table 1. Content shown in Table 1 is merely used as an example, and is not used as a final limitation.

**Table 1**

| Parameter | AI model |
|---|---|
| Identifier 1 of a radio unit | AI model a |
| Identifier 2 of a radio unit | AI model b |
| Cell identifier 1 corresponding to a radio unit | AI model c |
| Cell identifier 2 corresponding to a radio unit | AI model d |
| To-be-trained parameter 1 | AI model e |
| To-be-trained parameter 2 | AI model f |

As shown in Table 1:
◆ the identifier 1 of the radio unit is associated with the AI model a;
◆ the identifier 2 of the radio unit is associated with the AI model b;
◆ the cell identifier 1 corresponding to the radio unit is associated with the AI model c;
◆ the cell identifier 2 corresponding to the radio unit is associated with the AI model d;
◆ the to-be-trained parameter 1 is associated with the AI model e; and
◆ the to-be-trained parameter 2 is associated with the AI model f.

The content shown in Table 1 is described by using an association relationship between one parameter and an AI model as an example, but a scenario of an association relationship between two or more parameters and an AI model is not limited. For example, the request information 1 includes the identifier of the radio unit and the to-be-trained parameter, and the central node may determine, based on the identifier of the radio unit and the to-be-trained parameter, an AI model associated with the identifier of the radio unit and the to-be-trained parameter.

When the request information 1 includes one or more of the identifier of the radio unit, the cell identifier corresponding to the radio unit, and the to-be-trained parameter, the central node may determine a corresponding AI model based on the association relationship shown in Table 1.

For descriptions of the request information 1, refer to Table 2 and Table 3. Content shown in Table 2 and content shown in Table 3 are merely used as examples, and are not used as final limitations.

**Table 2**

| Parameter | Description |
|---|---|
| Name | Used to determine an AI model that needs to be trained |
| To-be-trained parameter | Used to determine a parameter that needs to be trained in the AI model |
| Identifier of a radio unit | Used to determine a radio unit that proposes AI model training |
| Cell identifier | Used to determine a cell to which AI trained is specifically applied |

As shown in Table 2:
◆ the request information 1 includes the name used to determine the AI model that needs to be trained;
◆ the request information 1 includes the to-be-trained parameter used to determine the parameter that needs to be trained in the AI model;
◆ the request information 1 includes the identifier of the radio unit used to determine the radio unit that proposes AI model training; and
◆ the request information 1 includes the cell identifier used to determine the cell to which the AI model trained is specifically applied.

The request information 1 may include one or more of the parameters listed in Table 2. This is not limited herein.

**Table 3**

| Parameter | Description |
|---|---|
| Model name | (1) Valid character set: a-z, A-Z, 0-9, and _- |
| | (2) Starting with a letter |
| | (3) Length not exceeding 32 characters |
| Network device identifier | gNB identifier |
| Cell identifier | Cell ID, belonging to a list of identifiers of cells served by a same network device, where the network device supports subscription requests from a plurality of cells |
| Model program parameter | Special configurable parameter requirement during model training |

As shown in Table 3:
◆ the request information 1 includes the model name indicating the AI model that needs to be trained, and the model name may be determined based on the content in the corresponding description column;
◆ the request information 1 includes the network device identifier used to determine a network device to which the radio unit that proposes AI model training belongs, and the network device identifier may be represented as the gNB identifier;
◆ the request information 1 includes the cell identifier, indicating a cell to which the AI model trained needs to be applied, and the cell indicated by the cell identifier belongs to a plurality of cells served by the network device indicated by the network device identifier.
◆ the request information 1 includes the model program (model program) parameter indicating the special configurable parameter requirement during model training, for example, the to-be-trained parameter of the AI model 1.

The request information 1 may include one or more of the parameters listed in Table 3. This is not limited herein.

The content described in Table 2 and the content described in Table 3 may be two different representation forms of the request information 1, and other forms are not limited.

In this embodiment of this application, parameters of an AI model may be classified into two types: a common parameter and a feature parameter. The common parameter of the AI model may be understood as a parameter shared by two or more AI models. The feature parameter of the AI model may be understood as a parameter unique to the AI model, and the parameter may be used to distinguish between different AI models.

In a possible implementation, the to-be-trained parameter of the AI model 1 may be one or both of a feature parameter of the AI model 1 and a common parameter of the AI model 1.

For example, the to-be-trained parameter of the AI model 1 may be the feature parameter of the AI model 1. The central node may train only the feature parameter of the AI model 1, and does not train the common parameter of the AI model 1. In this way, overheads of training the AI model 1 by the central node can be reduced.

For example, the to-be-trained parameter of the AI model 1 may be the common parameter of the AI model 1. The central node may train only the common parameter of the AI model 1, and does not train the feature parameter of the AI model 1. In this way, overheads of training the AI model 1 by the central node can be reduced.

For example, the to-be-trained parameter of the AI model 1 may be the common parameter and the feature parameter of the AI model 1. The central node may train the feature parameter and the common parameter of the AI model 1.

In this embodiment of this application, the common parameter of the AI model 1 may be understood as a parameter shared by the AI model 1 and an AI model 2, and the feature parameter of the AI model 1 may be understood as a parameter that distinguishes the AI model 1 from the AI model 2. In other words, a difference or distinction between the AI model 1 and the AI model 2 may be reflected by using the feature parameter of the AI model 1 and a feature parameter of the AI model 2.

Distinguishing the common parameter from the feature parameter of the AI model 1 helps reduce overheads of training the AI model 1 by the central node. For example, the AI model 2 is a trained AI model, and there is a common parameter between the AI model 2 and the AI model 1. The central node does not need to train the common parameter of the AI model 1, and only trains the feature parameter of the AI model 1.

The to-be-trained parameter of the AI model 1 is indicated or reported, so that the central node can train the AI model 1 in a targeted manner, and the central node does not need to train all parameters of the AI model 1, helping reduce overheads of training the AI model 1 by the central node.

In a possible implementation, the request information 1 may further include performance requirement information for the AI model 1.

The performance requirement information for the AI model 1 may be understood as: a performance requirement that needs to be met, for the first radio unit, by an AI model that actually needs to be used, performance parameter information that needs to be met, for the first radio unit, by an AI model obtained by training the AI model 1, a requirement proposed by the first radio unit for how the central node trains the AI model 1, or the like.

In a possible example, the performance requirement information for the AI model 1 may include the following examples:
◆ accuracy of the AI model 1 trained needs to meet a first threshold;
◆ the AI model 1 needs to be trained by using a training dataset whose data amount is greater than a second threshold; or
◆ the AI model 1 trained needs to be applicable to a channel detection task.

The performance requirement information for the AI model 1 is reported, so that the central node can train the AI model 1 in a targeted manner based on the performance requirement information for the AI model 1. This can avoid invalid training caused because an AI model 1 trained cannot meet a performance requirement of the first radio unit, and further avoid an increase in overheads of training the AI model 1 by the central node.

S502. The central node sends response information 1 to the first radio unit.

Correspondingly, the first radio unit receives the response information 1.

The response information 1 corresponds to the request information 1. In other words, the response information 1 is used to respond to the request information 1, or the response information 1 is a representation form of a response made by the central node to the request information 1. For example, the response information 1 indicates, to the first radio unit, whether the central node agrees to train the AI model 1.

For example, the response information 1 indicates that the central node agrees to train the AI model 1.

For another example, the response information 1 indicates that the central node disagrees to train the AI model 1.

In a possible implementation, the response information 1 may include at least one of the following:
◆ the name of the AI model 1;
◆ the identifier of the first radio unit;
◆ acknowledgment information, indicating that training of the AI model 1 is allowed; or
◆ negative acknowledgment information, indicating that training of the AI model 1 is not allowed.

For example, the response information 1 includes the name of the AI model 1. The first radio unit may determine, based on the name of the AI model 1, that the response information 1 is used to respond to the request for training the AI model 1.

Optionally, the first radio unit may further determine, based on the name of the AI model 1, that the central node agrees to train the AI model 1.

For example, the response information 1 includes the identifier of the first radio unit. The identifier of the first radio unit may be further used by the first radio unit to determine that the response information 1 is used to respond to the request information 1.

Optionally, the first radio unit may further determine, based on the identifier of the first radio unit, that the central node agrees to train the AI model 1.

For example, the response information 1 includes the acknowledgment information (for example, an ACK). The first radio unit may determine, based on the acknowledgment information, that the central node agrees to train the AI model 1.

For example, the response information 1 includes the negative acknowledgment information (for example, a NACK). The first radio unit may determine, based on the negative acknowledgment information, that the central node disagrees to train the AI model 1.

For descriptions of the response information 1, refer to Table 4 and Table 5. Content shown in Table 4 and content shown in Table 5 are merely used as examples, and are not used as final limitations.

**Table 4**

| Parameter | Description |
|---|---|
| Name | Indicating the AI model 1 |
| Acknowledgment information | Indicating that training of the AI model 1 is allowed |
| Identifier of the radio unit | Indicating the first radio unit |

As shown in Table 4:
◆ the response information 1 includes the name indicating the AI model 1, and in this way, the first radio unit may determine that the response information 1 is used to respond to the request for training the AI model 1;
◆ the response information 1 includes the acknowledgment information indicating that training of the AI model 1 is allowed; and
◆ the response information 1 includes the identifier of the radio unit used to determine the radio unit that proposes AI model training.

The response information 1 may include one or more of the parameters listed in Table 4. This is not limited herein.

**Table 5**

| Parameter | Description |
|---|---|
| Model name | (1) Valid character set: a-z, A-Z, 0-9, and _- |
| | (2) Starting with a letter |
| | (3) Length not exceeding 32 characters |
| Network device identifier | gNB identifier |
| ACK/NACK | 1---Success |
| | 2---Failure: resources being insufficient |
| | 3---Failure: the case model being not supported |

As shown in Table 5:
◆ the response information 1 includes the model name indicating the AI model 1, and the model name may be determined based on the content in the corresponding description column;
◆ the response information 1 includes the network device identifier used to determine a network device to which the radio unit that proposes AI model training belongs, and the network device identifier may be represented as the gNB identifier; and
◆ the response information 1 includes ACK/NACK indicating whether training of the AI model 1 is allowed.

The response information 1 may include one or more of the parameters listed in Table 5. This is not limited herein.

In a possible implementation, the response information 1 includes the ACK/NACK parameter, and the parameter may have different values. For example, if a value of the parameter is 1, it indicates that training of the AI model 1 is allowed; if a value of the parameter is 2, it indicates that training of the AI model 1 is not allowed because resources are insufficient; or if a value of the parameter is 3, it indicates that training of the AI model 1 is not allowed because the AI model 1 is not supported.

In a possible implementation, when the value of the parameter indicating ACK/NACK in the response information 1 is 3 and the first radio unit needs to train another AI model, the first radio unit may continue to send new request information to the central node; or when the value of the parameter indicating an ACK/NACK in the response information 1 is 2 and the first radio unit needs to train another AI model, the first radio unit may not send new request information to the central node.

It should be noted that the content described in Table 4 and the content described in Table 5 are two different representation forms of the response information 1, and other forms are not limited.

In conclusion, a mechanism for exchanging request information between the first radio unit and the central node is established, so that improving accuracy of an AI model used by a radio unit can be supported in this embodiment of this application.

In comparison with a solution in which the first radio unit independently trains the AI model 1, through exchange of request information between the first radio unit and the central node, the first radio unit may request the central node to help train the AI model 1. Because a training capability of the central node is better than a training capability of the first radio unit, completing training of the AI model 1 with the help of the central node can avoid insufficient model accuracy of an AI model 1 trained caused by an insufficient amount of training data of the first radio unit, imbalanced data distribution, or an undiversified data source.

Based on the foregoing interaction mechanism, the central node may obtain, from the first radio unit, the request information for training the AI model 1; the central node may determine whether the central node can help train the AI model 1; and when the central node determines that the central node can help train the AI model 1, the accuracy of an AI model 1 trained by the central node is superior to that of an AI model 1 trained by the first radio unit.

Based on the foregoing interaction mechanism, the first radio unit may have an opportunity to request the central node to help train the AI model 1. In comparison with a solution in which the first radio unit independently completes training of the AI model 1, completing training of the AI model 1 with the help of the central node can overcome insufficient model accuracy of an AI model 1 trained caused by insufficient amount of training data of the first radio unit, thereby supporting improving accuracy of an AI model specifically used by a radio unit.

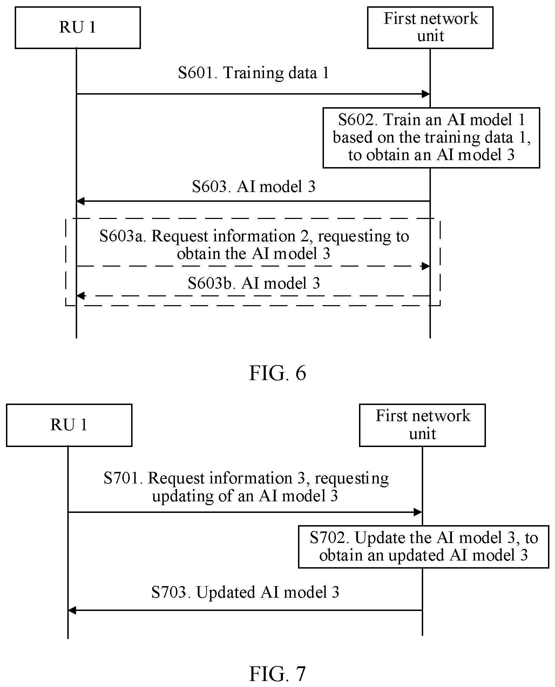

The following further describes, with reference to FIG. 6, the method shown in FIG. 5.

FIG. 6 is a schematic interaction flowchart of another communication method according to an embodiment of this application. The method shown in FIG. 6 may be performed by an RU 1 (which may be an example of the first radio unit) and a central node (a first network element is used as an example), or may be performed by modules and/or components (for example, chips or integrated circuits) that are installed in the RU 1 and the first network element and that have corresponding functions. The following uses the RU 1 and the first network element as an example for description. As shown in FIG. 6, the method includes the following steps.

S601. The RU 1 sends training data 1 (for example, first training data) to the first network element.

Correspondingly, the first network element receives the training data 1.

The training data 1 can be used to train one or both of a common parameter and a feature parameter of an AI model 1. For example, the training data 1 is used to train the common parameter of the AI model 1, or the training data 1 is used to train the feature parameter of the AI model 1, or the training data 1 is used to train the common parameter and the feature parameter of the AI model 1. This is not limited herein.

When sending, to the central node, training data used to train the feature parameter of the AI model 1, the RU 1 may complete training of the feature parameter of the AI model 1. When sending, to the central node, training data used to train the common parameter of the AI model 1, the RU 1 may complete training of the common parameter of the AI model 1.

In addition, the common parameter of the AI model 1 and the feature parameter of the AI model 1 may be configured in the RU 1, or the RU 1 may determine the common parameter of the AI model 1 and the feature parameter of the AI model 1 by itself. A manner or a way in which the RU 1 determines the common parameter of the AI model 1 and the feature parameter of the AI model 1 is not limited in this embodiment of this application.

The RU 1 may determine, based on response information 1, whether the first network element supports training of the AI model 1. When the response information 1 indicates that the first network element agrees to train the AI model 1, the RU 1 may start a model training procedure. For example, the RU 1 starts a procedure of collecting the training data 1. For example, the RU 1 selects a target user in a target scenario, and performs basic operations such as data collection and preprocessing on the target user, to form a sample data format needed for model training.

For descriptions of reporting the training data 1 by the RU 1 to the first network element, refer to Table 6. Content shown in Table 6 is merely used as an example, and is not used as a final limitation.

**Table 6**

| Parameter | Description |
|---|---|
| Dataset name | A dataset name, where validity restrictions are as follows: |
| | (1) valid character set: a-z, A-Z, 0-9, and _-; |
| | (2) starting with a letter; and |
| | (3) length not exceeding 255 characters |
| Quantity of features | Indicating a quantity of features |
| Feature | A definition of a feature is an array element |
| Sample length | Indicating a data storage length of a single sample, unit: byte |
| Quantity of samples | Indicating a quantity of samples |
| Sample set period | Duration of a dataset, unit: hour |
| Sample subject | Samples are stored in sequence, where samples are stored one by one, and features of each sample are also stored one by one |

The RU 1 may report the training data 1 to the first network element by using the content or a form shown in Table 6.

S602. The first network element trains the AI model 1 based on the training data 1, to obtain an AI model 3.

For descriptions of a process of training the AI model 1 by the first network element, refer to an existing process. Details are not described.

In a possible implementation, the first network element may perform joint training on a plurality of AI models.

For example, the first network element receives AI model training requests from a plurality of RUs.

For example, the first network element receives request information, from the RU 1, for requesting training of the AI model 1 and request information, from an RU 2, for requesting training of an AI model 2.

When the first network element determines that the first network element can train the AI model 1 and the AI model 2, the RU 1 and the RU 2 respectively send the training data 1 and training data 2 to the first network element. The first network element aggregates training data from a plurality of RUs to form a larger training dataset, to obtain more sufficient training data to train and optimize models.

For example, the first network element performs joint training on the AI model 1 and the AI model 2 by using the training data 1 and the training data 2.

In a possible implementation, the first network element may independently complete training of the AI model 1 and the AI model 2. In this way, problems of data transmission and communication costs can be avoided, and efficiency and accuracy of model training and inference are ensured.

In a possible implementation, the first network element may alternatively deliver training tasks of the AI model 1 and the AI model 2 to a plurality of network elements (such as an RU, a CU, and a DU), and the plurality of network elements jointly complete the training tasks of the AI model 1 and the AI model 2. In this way, computational efficiency and a computational speed can be improved.

In a possible implementation, the AI model 3 is obtained by the central node by training the AI model 1 based on the training data 1 and the training data 2.

For example, the first network element trains the AI model 1 based on the training data 1 and the training data 2. The training data 2 is from the RU 2. In other words, the first network element obtains a plurality of pieces of training data from a plurality of RUs, and trains the AI model 1 by using the plurality of pieces of training data.

Training the AI model 1 using training data from another radio unit can increase a source, an amount, and a type of data used for training the AI model 1, thereby supporting improving accuracy of the AI model 3.

In a possible implementation, the first network element may first determine the common parameter between the AI model 1 and the AI model 2 and respective feature parameters, and separately train the common parameter between the AI model 1 and the AI model 2 and the feature parameters.

For example, the first network element trains the common parameter between the AI model 1 and the AI model 2, and separately trains the feature parameter of the AI model 1 and the feature parameter of the AI model 2. When the first network element needs to send an AI model trained to the RU 1 and the RU 2, the first network element may combine a trained common parameter and a trained feature parameters, and deliver a combination of the trained parameters to the corresponding RUs.

Parameters of the AI model are classified into the common parameter and the feature parameter, and are separately trained. In this way, a common parameter trained is applicable to another AI model, and training overheads can be reduced. For example, the common parameter needs to be trained only once. In addition, a differentiation requirement of the first AI model can also be met.

In a possible implementation, the request information 1 may be further used to request the central node to perform joint training on the AI model 1.

When the central node determines, based on the request information 1, training resources of the central node, and the training capability of the central node, that joint training can be performed on the AI model 1, the central node may obtain training data from another RU, and train the AI model 1 by using training data of a plurality of RUs. For details, refer to the foregoing content in which the first network element trains the AI model 1 and the AI model 2. The details are not described again. In this way, accuracy of the AI model 3 can be effectively improved.

S603. The first network element sends the AI model 3 to the RU 1.

Correspondingly, the RU 1 receives the AI model 3.

According to the foregoing solution, when the response information 1 indicates that the central node agrees to train the AI model 1, the first radio unit may report the training data 1 to the central node, and the central node may train the AI model 1 by using the training data 1, and send, to the first radio unit, the AI model 3 trained. In this way, the first radio unit may obtain the AI model 3 trained by the central node.

Optionally, that the first network element sends the AI model 3 to the RU 1 may include the following steps.

S603a. The RU 1 sends request information 2 to the first network element.

Correspondingly, the first network element receives the request information 2. The request information 2 is used to request to obtain the AI model 3.

For descriptions of the request information 2, refer to Table 7. Content shown in Table 7 is merely used as an example, and is not used as a final limitation.

**Table 7**

| Parameter | Description |
|---|---|
| Model name | Indicating an AI model that needs to be obtained |
| Network device identifier | gNB identifier |
| Cell identifier | Cell ID |
| Request program parameter | Indicating a parameter related to a model download request |

As shown in Table 7:
◆ the request information 2 includes the model name indicating the AI model that needs to be obtained;
◆ the request information 2 includes the network device identifier used to determine a network device to which a radio unit that proposes AI model training belongs, and the network device identifier may be represented as the gNB identifier;
◆ the request information 2 includes the cell identifier parameter indicating a cell to which the AI model trained needs to be applied, and the cell indicated by the cell identifier belongs to a plurality of cells served by the network device indicated by the network device identifier; and
◆ the request information 2 includes a request program parameter (request program) indicating the parameter related to the model download request.

S603b. The first network element sends the AI model 3 to the RU 1.

Correspondingly, the RU 1 receives the AI model 3.

Based on the foregoing information exchange, the first radio unit may obtain, from the central node, the AI model trained.

In a possible implementation, after a period of time elapsed from reporting or sending the training data 1 to the first network element, the RU 1 may send the request information 2 to the first network element. In this way, signaling interaction overheads between the RU 1 and the first network element can be reduced.

In a possible implementation, after reporting or sending the training data 1 to the first network element, the RU 1 may send the request information 2 to the first network element after receiving notification information, from the first network element, indicating that training of the AI model 1 is completed. In this way, the RU 1 may request, based on the notification from the first network element, to obtain the AI model 3 from the first network element. In this way, after completing training of the AI model 1, the first network element may indicate, to the RU 1, that training of the AI model 1 is completed, and the RU 1 may determine, based on the indication, that the RU 1 may request to obtain the AI model 3.

It should be noted that the central node may extract, based on an actual configuration requirement of the RU 1, a trained feature parameter and a trained common parameter of the RU 1, and test the extracted trained feature parameter and the extracted trained common parameter. After a basic test accuracy requirement of the RU 1 is met, model delivery may be performed. For example, the central node delivers, to the RU 1, the AI model 3 trained. When the request information 1 includes performance requirement information corresponding to the AI model 1, the central node may test, based on the performance requirement information for the AI model 1, the AI model 3 trained, and deliver the AI model 3 to the RU 1 only when the performance requirement information for the AI model 1 is met.

After receiving the AI model 3, the RU 1 may perform basic management actions such as format conversion and storage on the AI model 3. When the AI model 3 needs to be used, the RU 1 may load the AI model 3, collect data needed for corresponding inference, perform model inference, and the like.

The RU 1 may further monitor performance of the AI model 3. When detecting that model accuracy of the AI model 3 deteriorates to being unable to work, the RU 1 may exchange, with the central node, information for model update. For details, refer to content shown in FIG. 7.

According to the foregoing technical solution, in this embodiment of this application, the RU 1 may be supported in obtaining the AI model 3 trained by the first network element.

The following further describes, with reference to FIG. 7, the method shown in FIG. 6.

FIG. 7 is a schematic interaction flowchart of still another communication method according to an embodiment of this application. The method shown in FIG. 7 may be performed by an RU 1 and a first network element, or may be performed by modules and/or components (for example, chips or integrated circuits) that are installed in the RU 1 and the first network element and that have corresponding functions. The following uses the RU 1 and the first network element as an example for description. As shown in FIG. 7, the method includes the following steps.

S701. The RU 1 sends request information 3 to the first network element.

Correspondingly, the first network element receives the request information 3. The request information 3 is used to request updating of an AI model 3.

S702. The first network element performs update training on the AI model 3, to obtain an updated AI model 3.

For descriptions of a process of updating the AI model 3 by the first network element, refer to an existing process. Details are not described.

In the process of updating the AI model 3, the RU 1 may further send, to the first network element, training data used to update the AI model 3.

S703. The first network element sends the updated AI model 3 to the RU 1.

Correspondingly, the RU 1 receives the updated AI model 3.

For example, the first network element may send, to the RU 1, all parameters of the updated AI model 3 or the updated AI model 3, or the first network element may send, to the RU 1, an updated parameter of the updated AI model 3. In conclusion, the RU 1 may obtain the updated AI model 3. A specific implementation is not limited.

According to the foregoing technical solution, the RU 1 may obtain the updated AI model 3 from the first network element.

Based on the foregoing information exchange, the RU 1 may complete a procedure of updating the AI model 3, and obtain the updated AI model 3 from the first network element.

Content shown in FIG. 6 and content shown in FIG. 7 are described by using an example in which the first network element is the central node. The central node may alternatively be a DU, a CU, a second network element, a third network element, or the like. When the central node is a network element other than the first network element, for interaction between the central node and the first radio unit, refer to interaction between the first network element and the RU 1. Details are not described again.

The following describes apparatus embodiments corresponding to the method embodiments of this application. The following briefly describes only the apparatus. For specific implementation steps and details of the solution, refer to the foregoing method embodiments.

To implement functions in the methods provided in this application, the first radio unit and the central node may each include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

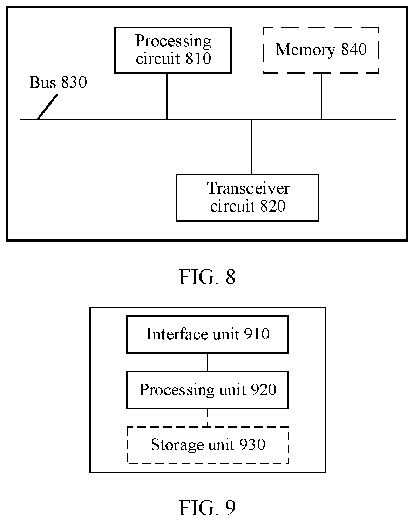

FIG. 8 is a block diagram of a communication apparatus according to an embodiment of this application. The communication apparatus includes a processor 810 and a communication interface 820. The processor 810 and the communication interface 820 may be connected to each other through a bus 830. The communication apparatus may be a central node, or may be a first radio unit.

Optionally, the communication apparatus may further include a memory 840. The memory 840 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 840 is configured to store related instructions and data.

The processor 810 may be one or more central processing units (central processing units, CPUs). When the processor 810 is one CPU, the CPU may be a single-core CPU, or may be a multi-core CPU.

The processor 810 may be a signal processor, a chip, another integrated circuit that can implement the methods in this application, or a part of circuits that are in the foregoing processor, chip, or integrated circuit and that are configured to perform a processing function.

The communication interface 820 may alternatively be an input/output interface. The input/output interface is configured to input or output a signal or data, or may be an input/output circuit.

When the communication apparatus is the central node, for example, the processor 810 is configured to perform the following operations: receiving request information 1, sending response information 1, and the like.

When the communication apparatus is the first radio unit, for example, the processor 810 is configured to perform the following operations: sending request information 1, receiving response information 1, and the like.

The foregoing content is merely used as an example for description. When the communication apparatus is the central node or the first radio unit, the communication apparatus is responsible for performing methods or steps related to the central node or the first radio unit in the foregoing method embodiments.

When the communication apparatus is the central node or the first radio unit, the communication interface 820 may also be referred to as a transceiver.

The foregoing descriptions are merely examples. For specific content, refer to content shown in the method embodiments.

For an implementation of the operations in FIG. 8, refer to the corresponding descriptions of the method embodiments shown in FIG. 5 to FIG. 7.

FIG. 9 is a block diagram of another communication apparatus according to an embodiment of this application. The communication apparatus may be a central node or a first radio unit, or may be a chip or a module in the central node or the first radio unit, and is configured to implement the methods in the foregoing embodiments. The communication apparatus includes an interface unit 910 and a processing unit 920. The following describes the interface unit 910 and the processing unit 920 by using examples.

The interface unit 910 may include a sending unit and a receiving unit. The sending unit is configured to perform a sending action of the communication apparatus, and the receiving unit is configured to perform a receiving action of the communication apparatus. For ease of description, in embodiments of this application, the sending unit and the receiving unit are combined into one interface unit. Unified descriptions are provided herein, and details are not described below again.

When the communication apparatus is the central node, for example, the interface unit 910 is configured to receive request information 1, send response information 1, and the like. The processing unit 920 is configured to perform content of the central node related to steps such as processing and coordination. For example, the processing unit 920 is configured to determine the response information 1.

When the communication apparatus is the first radio unit, for example, the interface unit 910 is configured to perform the following operations: sending request information 1, receiving response information 1, and the like. The processing unit 920 is configured to perform content of the first radio unit related to steps such as processing and coordination. For example, the processing unit 920 is configured to determine the request information 1, and the like.

The foregoing content is merely used as an example for description. When the communication apparatus is the central node or the first radio unit, the communication apparatus is responsible for performing methods or steps related to the central node or the first radio unit in the foregoing method embodiments.

Optionally, the communication apparatus further includes a storage unit 930, configured to store a program or code used to perform the foregoing methods.

The apparatus embodiments shown in FIG. 8 and FIG. 9 are used for implementing the content described in FIG. 5 to FIG. 7.

For specific execution steps and methods of the apparatuses shown in FIG. 8 and FIG. 9, refer to the content described in the foregoing method embodiments.

This application further provides a chip, including a processor, configured to: invoke instructions from a memory and run the instructions stored in the memory, so that a communication device on which the chip is installed performs the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to be coupled to the memory, and configured to perform a method and a function that are related to the network device or the terminal device in any one of the foregoing embodiments.

Another embodiment of this application provides a computer program product including instructions. When the computer program product is run on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

A person of ordinary skill in the art may be aware that, units and algorithm steps of the examples described with reference to embodiments disclosed in this specification can be implemented by electronic hardware or a combination of computer software and electronic hardware. Whether a function is performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in other manners. For example, the described apparatus embodiments are merely examples. For example, the unit division is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network elements. Some or all of the units may be selected based on actual requirements to achieve the objectives of the technical solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, wherein the method is applied to a first radio unit, and the method comprises:
sending first request information, wherein the first request information is used to request training of a first artificial intelligence model; and
receiving response information, wherein the response information indicates whether training of the first artificial intelligence model is allowed.

2. The method according to claim 1, wherein the response information indicates that training of the first artificial intelligence model is allowed, and the method further comprises:
sending first training data, wherein the first training data is used to train at least one of a common parameter and a feature parameter of the first artificial intelligence model, wherein
the common parameter of the first artificial intelligence model is a parameter shared by the first artificial intelligence model and a second artificial intelligence model, and
the feature parameter of the first artificial intelligence model is a parameter that distinguishes the first artificial intelligence model from the second artificial intelligence model; and
receiving a third artificial intelligence model, wherein the third artificial intelligence model is a model obtained by training the first artificial intelligence model.

3. The method according to claim 2, wherein the receiving the third artificial intelligence model comprises:
sending second request information, wherein the second request information is used to request to obtain the third artificial intelligence model; and
receiving the third artificial intelligence model.

4. The method according to claim 3, wherein before the sending the second request information, the method further comprises:
receiving notification information, wherein the notification information indicates that training of the first artificial intelligence model is completed.

5. The method according to any one of claims 2 to 4, wherein the method further comprises:
sending third request information, wherein the third request information is used to request updating of the third artificial intelligence model; and
receiving an updated third artificial intelligence model.

6. The method according to any one of claims 1 to 5, wherein the first request information comprises at least one of the following:
a name of the first artificial intelligence model, a to-be-trained parameter of the first artificial intelligence model, an identifier of the first radio unit, or an identifier of a cell corresponding to the first radio unit.

7. The method according to claim 6, wherein the to-be-trained parameter is at least one of the feature parameter and the common parameter of the first artificial intelligence model.

8. The method according to any one of claims 1 to 7, wherein the response information comprises at least one of the following:
the name of the first artificial intelligence model, the identifier of the first radio unit, acknowledgment information, or negative acknowledgment information, wherein
the acknowledgment information indicates that training of the first artificial intelligence model is allowed, and
the negative acknowledgment information indicates that training of the first artificial intelligence model is not allowed.

9. The method according to any one of claims 1 to 8, wherein the first request information comprises performance requirement information of the first radio unit for the first artificial intelligence model.

10. The method according to any one of claims 2 to 9, wherein
the third artificial intelligence model is a model obtained by training the first artificial intelligence model based on the first training data and second training data, wherein
the second training data is from a second radio unit, and the second radio unit is different from the first radio unit.

11. A communication method, wherein the method is applied to a central node, and the method comprises:
receiving first request information, wherein the first request information is used to request training of a first artificial intelligence model; and
sending response information, wherein the response information indicates whether training of the first artificial intelligence model is allowed.

12. The method according to claim 11, wherein the response information indicates that training of the first artificial intelligence model is allowed, and the method further comprises:
receiving first training data, wherein the first training data is used to train at least one of a common parameter and a feature parameter of the first artificial intelligence model, wherein
the common parameter of the first artificial intelligence model is a parameter shared by the first artificial intelligence model and a second artificial intelligence model, and
the feature parameter of the first artificial intelligence model is a parameter that distinguishes the first artificial intelligence model from the second artificial intelligence model;
training the first artificial intelligence model based on the first training data to obtain a third artificial intelligence model; and
sending the third artificial intelligence model.

13. The method according to claim 12, wherein the sending the third artificial intelligence model comprises:
receiving second request information, wherein the second request information is used to request to obtain the third artificial intelligence model; and
sending the third artificial intelligence model.

14. The method according to claim 13, wherein before the receiving the second request information, the method further comprises:
sending notification information, wherein the notification information indicates that training of the first artificial intelligence model is completed.

15. The method according to any one of claims 12 to 14, wherein the method further comprises:
receiving third request information, wherein the third request information is used to request updating of the third artificial intelligence model; and
sending an updated third artificial intelligence model.

16. The method according to any one of claims 11 to 15, wherein the first request information comprises at least one of the following:
a name of the first artificial intelligence model, a to-be-trained parameter of the first artificial intelligence model, an identifier of a first radio unit, or an identifier of a cell corresponding to the first radio unit, wherein
the first radio unit is a radio unit by which the first artificial intelligence model is used.

17. The method according to claim 16, wherein the to-be-trained parameter is at least one of the feature parameter and the common parameter of the first artificial intelligence model.

18. The method according to any one of claims 11 to 17, wherein the response information comprises at least one of the following:
the name of the first artificial intelligence model, the identifier of the first radio unit, and acknowledgment information or negative acknowledgment information, wherein
the acknowledgment information indicates that training of the first artificial intelligence model is allowed, and
the negative acknowledgment information indicates that training of the first artificial intelligence model is not allowed; and
the first radio unit is a radio unit for which the first artificial intelligence model is used.

19. The method according to any one of claims 11 to 18, wherein the first request information comprises performance requirement information for the first artificial intelligence model.

20. The method according to any one of claims 12 to 19, wherein the training the first artificial intelligence model based on the first training data to obtain the third artificial intelligence model comprises:
training the first artificial intelligence model based on the first training data and second training data to obtain the third artificial intelligence model, wherein
the second training data is from a second radio unit, and the second radio unit is different from the first radio unit.

21. The method according to any one of claims 12 to 20, wherein the training the first artificial intelligence model based on the first training data to obtain the third artificial intelligence model comprises:
determining the common parameter of the first artificial intelligence model and the feature parameter of the first artificial intelligence model; and
separately training the common parameter of the first artificial intelligence model and the feature parameter of the first artificial intelligence model based on the first training data.

22. A communication system, comprising a first radio unit and a central node, wherein
the first radio unit is configured to send first request information to the central node, wherein the first request information is used to request training of a first artificial intelligence model; and
the central node is configured to receive the first request information and send response information to the first radio unit, wherein the response information indicates whether training of the first artificial intelligence model is allowed.

23. A communication apparatus, comprising a processor, wherein the processor is configured to cause, by executing a computer program or instructions or by using a logic circuit,
the communication apparatus to perform the method according to any one of claims 1 to 10, or
the communication apparatus to perform the method according to any one of claims 11 to 21.

24. A communication apparatus, comprising a logic circuit and an input/output interface, wherein the input/output interface is configured to input and/or output a signal; and
the logic circuit is configured to perform the method according to any one of claims 1 to 10, or
the logic circuit is configured to perform the method according to any one of claims 11 to 21.

25. A computer-readable storage medium, wherein the computer-readable storage medium stores a computer program or instructions; and when the computer program or the instructions are run on a computer,
the method according to any one of claims 1 to 10 is performed, or
the method according to any one of claims 11 to 21 is performed.

26. A computer program product, comprising instructions, wherein when the instructions are run on a computer,
the method according to any one of claims 1 to 10 is performed, or
the method according to any one of claims 11 to 21 is performed.

27. A chip system, wherein the chip system comprises a processor, a memory, and an input/output port, the memory is configured to store a computer program, and the processor is configured to execute the computer program stored in the memory,
to cause the processor to perform the method according to any one of claims 1 to 10, or
to cause the processor to perform the method according to any one of claims 11 to 21.
